# EUROPÄISCHE PATENTSCHRIFT

(11) **EP 3 235 049 B1**
(45) Veröffentlichungstag und Bekanntmachung des Hinweises auf die Patenterteilung: **26.02.2020**
(21) Anmeldenummer: 15801385.4
(22) Anmeldetag: 24.11.2015
(51) Int. Cl.: B60L 58/26, H01M 10/6557, H01M 10/6555, H01M 10/6554, H01M 10/613

(54) **BATTERIE MIT KÜHLPLATTE ALS MONTAGEPLATTE**
A BATTERY WITH COOLING PLATE AS MOUNTING PLATE
BATTERIE AVEC PLAQUE DE REFROIDISSEMENT FAISANT OFFICE DE PLAQUE DE MONTAGE

(30) Priorität: 16.12.2014 DE 102014225971
(43) Veröffentlichungstag der Anmeldung: 25.10.2017
(73) Patentinhaber: Robert Bosch GmbH, 70442 Stuttgart (DE)
(72) Erfinder: STIMM, Frank, 71229 Leonberg (DE); MANGOLD, Benjamin, 70597 Stuttgart (DE)
(86) Internationale Anmeldenummer: PCT/EP2015/077440
(87) Internationale Veröffentlichungsnummer: WO 2016/096329

(56) Entgegenhaltungen:
- DE-A1-102009 006 990
- DE-A1-102011 114 772
- DE-A1-102013 207 535
- US-A1- 2012 208 053
- US-A1- 2014 162 105

## Beschreibung

Die vorliegende Erfindung betrifft ein Batteriezellenmodul mit einer Kühlplatte, wobei die Kühlplatte als Montageplatte ausgebildet ist. Ferner betrifft die Erfindung ein Batteriezellenmodul und ein Kraftfahrzeug mit solch einem Batteriezellenmodul.

### Stand der Technik

Es besteht weltweit ein erheblicher Bedarf an Batterien für breite Anwendungsbereiche, einerseits etwa für stationäre Anlagen, wie zum Beispiel Windkraftanlagen oder Solarkraftanlagen, andererseits aber auch für mobile Elektronikgeräte, wie zum Beispiel Laptops und Kommunikationsgeräte. Nicht zuletzt ist es auch abzusehen, dass der Bedarf an Batterien für Fahrzeuge, wie zum Beispiel für Hybrid- und Elektrofahrzeugen, in den nächsten Jahren steigen wird. An all diese Batterien werden sehr hohe Anforderungen hinsichtlich Zuverlässigkeit, Lebensdauer und Leistungsfähigkeit gestellt.

Typischerweise werden hierfür mehrere Batteriezellen elektrisch in Reihenschaltung und/oder Parallelschaltung miteinander verschaltet zur Bildung von leistungsstaken Batteriezellenmodulen.

Sind Batteriezellen bzw. Batteriezellenmodule für einen Einsatz in einem Kraftfahrzeug vorgesehen, so sind Maßnahmen zu treffen, die das Einbauen der Batteriezellen bzw. Batteriezellenmodule in ein Kraftfahrzeug in einer möglichst einfachen und kostengünstigen Weise ermöglichen. Gleichzeitig muss der hohe Sicherheitsstandard gewährleistet sein. Bei derzeit gebräuchlichen Batteriezellenmodulen zum Festhalten, Montieren oder anderweitigen Befestigen von Batteriezellen sind zahlreiche Bauteile sowie komplizierte Fertigungsprozesse erforderlich, um eine korrekte Montage zu gewährleisten, wobei Laserschweißen, Punktschweißen, sowie eine hohe Bauteilanzahl an Befestigungselementen oder dergleichen zum Einsatz kommen. Im Fall des Schweißens treten bei solchen Prozessen äußerst hohe Temperaturen auf und es kommt zu Schweißwülsten und verwandten, unerwünschten Nebenwirkungen. Darüber hinaus kann die Verwendung von Kompressionsbegrenzern (zusammen mit ihren zugehörigen Verbindungsstangen) entlang der Stapelabmessung beim Zusammenbau von zahlreichen Batteriezellen zu einem größeren Batteriemodul während des Stapelns zu Toleranzproblemen führen.

In DE 10 2013 200 239 A1 wird eine Kühlplatte für Batteriezellen zum Einsatz in einem Kraftfahrzeug beschrieben, wobei die Kühlplatte direkt auf einer Fahrzeugoberfläche, die beispielsweise eine Bodenwanne sein kann, sitzend angeordnet ist. Die Dokumente DE10 2011 114772, DE 10 2009 006990 und US 2014/162105 offenbaren Batteriemodule mit Kühlplatten.

### Offenbarung der Erfindung

Die erfindungsgemäße Kühlplatte des Batteriemoduls ist grundsätzlich als eine Montageplatte ausgebildet. Daher weist die Kühlplatte Montageelemente zum direkten Montieren der Kühlplatte in ein Kraftfahrzeug auf. Die Montageelemente ermöglichen somit den Einbau von Batteriezellen in ein Kraftfahrzeug über die erfindungsgemäße Kühlplatte. Weiter wird für die erfindungsgemäße Kühlplatte gefordert, dass die Kühlplatte zusammen mit einem Gehäuse einen abgeschlossenen Raum für die Aufnahme von Batteriezellen bildet.

Der vorliegenden Erfindung liegt die Erkenntnis zugrunde, dass eine weitere Vereinfachung einer Montage einer Batterie in ein Kraftfahrzeug dadurch erzielt werden kann, dass die Kühlplatte für die Batterie nicht nur als eine Montageplatte ausgestaltet ist, und somit der Einbau der Batterie in das Kraftfahrzeug sehr bequem über die Kühlplatte erfolgt, sondern auch dass die Kühlplatte gleichzeitig zusammen mit einem Gehäuse einen abgeschlossenen Raum zur Aufnahme der Batterie bildet.

Sehr vorteilhaft wird durch die erfindungsmäßige Anordnung die Kühlplatte in vielerlei Funktionen verwendet. Die Kühlplatte stellt zusammen mit einem Gehäuse einen abgeschlossen Raum zur Aufnahme der Batterie bereit, d.h. die Kühlplatte ist auch als ein Bauteil eines Gesamtgehäuses zu betrachten. Dadurch wird vorteilhaft die Notwendigkeit eines Einsatzes eines separaten Gehäuseteils zur Bildung eines abgeschlossenen Raumes eliminiert.

Weiter ist zu beachten, dass durch die Erfindung vorteilhaft eine Kühlung der Batterie durch eine direkte Kontaktierung der Batterie mit der Kühlplatte ermöglicht wird, ohne dabei auf ein Gehäuse mit einem abgeschlossenen Raum für die Batterie verzichten zu müssen. Ein abgeschlossener Raum bietet einerseits Schutz für die darin angeordnete Batterie vor schädlichen Einwirkungen von außen. Im Übrigen bietet solch ein abgeschlossener Raum nicht nur Schutz für die darin angeordnete Batterie, sondern auch weitere Komponenten wie die notwendige Elektronik. Beispielshaft sei hier die Zellüberwachungseinheit (CSC, Cell Supervision Circuit) genannt. Je nach konkreter Ausführung ermöglicht die Erfindung, dass neben der Batterie auch andere kühlungstaugliche Komponenten (z.B. BDU, Battery Disconnect Unit) über die Kühlplatte gekühlt werden.

Die schädlichen Einwirkungen von außen können mechanischer Natur sein, wie sie etwa bei einem Unfall durch plötzliche Krafteinwirkung hervorgerufen werden. Andererseits schützt ein abgeschlossener Raum auch vor dem Eindringen von Feuchtigkeit, Staub und gefährlichen Stoffen wie bestimmte Gase, die die Batterie schädigen könnten. Auch hindert der abgeschlossene Raum in einer umgekehrten Situation, also wenn aus der Batterie im Störungsfall selbst unkontrolliert Stoffe austreten, ein Verbreiten dieser Stoffe in die Umgebung.

Schließlich wird festgestellt, dass durch die Möglichkeit, auf bestimmte, an sich notwendige separate Bauteile ohne Funktionsverlust verzichten zu können, die Kosten der Anordnung vorteilhaft auch reduziert werden. Zusätzlich wird die Anordnung auch bezüglich des Gewichtsaspekts günstiger, da das Weglassen von separaten Bauteilen immer vorteilhaft zu Einsparungen am Gesamtgewicht führt. Dies gilt gerade bezüglich Gewichten in einem Kraftfahrzeug.

Vorteilhafte Weiterbildungen der Erfindung sind in den Unteransprüchen angegeben und in der Beschreibung beschrieben.

### Zeichnung

Ausführungsbeispiele der Erfindung werden anhand der Zeichnungen und der nachfolgenden Beschreibung näher erläutert. Es zeigen:
Fig. 1 eine erste Ausführungsform der Erfindung im Querschnitt,
Fig. 2 eine erste erfindungsgemäße Kühlplatte in Draufsicht, und
Fig. 3 eine zweite Ausführungsform der Erfindung in perspektivischer Ansicht.

### Ausführungsbeispiele der Erfindung

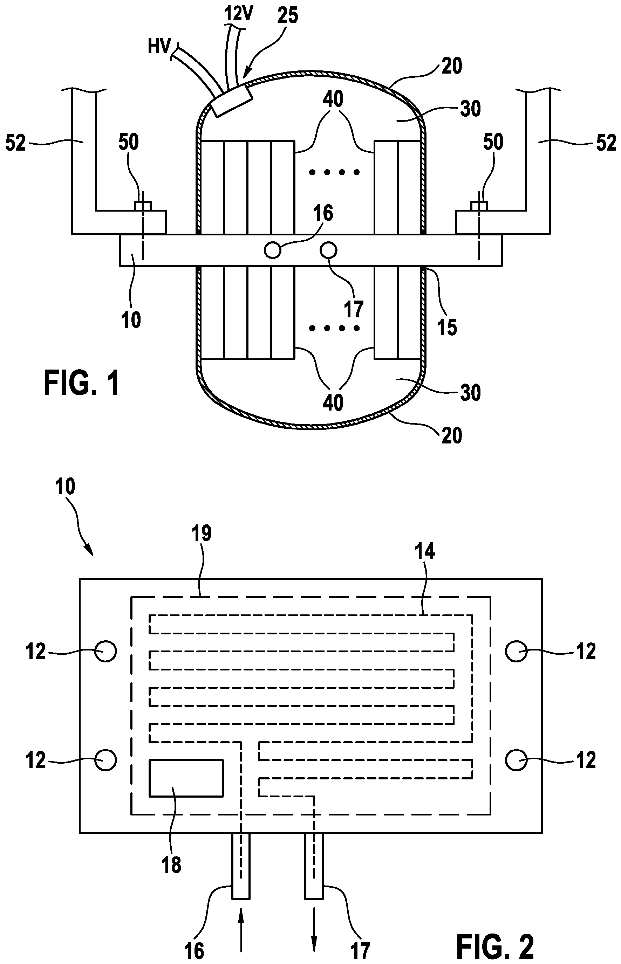

Ein erstes Ausführungsbeispiel der erfindungsgemäßen Kühlplatte wird nun mit Hilfe der Figur 1 erläutert. Grundsätzlich ist die erfindungsgemäße Kühlplatte 10 für Batteriezellen 40 als eine Montageplatte ausgebildet. Die Kühlplatte 10 weist daher Montageelemente 12 zum direkten Montieren der Kühlplatte 10 in ein Kraftfahrzeug auf. Wie erfindungsgemäß gefordert, bildet die Kühlplatte 10 zusammen mit einem Gehäuse 20 einen abgeschlossenen Raum 30 für die Aufnahme von Batteriezellen 40.

Das Gehäuse 20 stellt grundsätzlich einen Raum 30 zur Aufnahme von Batteriezellen 40 bereit, wobei das Gehäuse 20 an sich eine offene Seite aufweist. Wird diese offene Seite durch eine weitere Abgrenzung, wie hier erfindungsgemäß durch die Kühlplatte 10 realisiert, abgedeckt, resultiert daraus ein abgeschlossener Raum 30.

Vorteilhafte technische Wirkungen dieser Anordnung wurden bereits zuvor ausführlich beschrieben und werden hier nicht wiederholt.

In dieser Ausführungsform ist das Gehäuse 20 als ein Halbschalengehäuse ausgebildet. Ein Halbschalengehäuse bietet den Vorteil, dass es einstückig ausgebildet sein kann und daher nicht aus mehreren Bauteilen zusammengefügt werden muss. Ein tiefgezogenes Halbschalengehäuse wird bevorzugt, da die Herstellung kostengünstig und zuverlässig ist.

Die Fig. 2 zeigt die erfindungsgemäße Kühlplatte 10 in Draufsicht, wobei aus Gründen der Übersichtlichkeit das Gehäuse 20 nicht dargestellt ist. Die Montageelemente 12 sind hier als Öffnungen 12 ausgebildet. Die Öffnungen 12 können zur mechanischen Verbindung mit einem Kraftfahrzeug genutzt werden, indem Verbindungsmittel 50 wie Bolzen in die Öffnungen 12 eingeführt werden und dabei mit einer Befestigungsvorrichtung 52 des Kraftfahrzeugs verbunden werden. Die Öffnungen 12 können insbesondere als Anschrauböffnungen ausgebildet sein.

Alternativ oder zusätzlich zu den Öffnungen 12 können die Montageelemente 12 der Kühlplatte 10 als Befestigungs- oder Halteelemente, insbesondere Arretier- oder Hakenelemente, ausgebildet sein.

Es wird weiter vorgeschlagen, dass die Kühlplatte 10 Kühlleitungen 14, insbesondere Kühlkanäle oder Kühlschläuche, umfasst. Bevorzugt sind die Kühlleitungen 14 dabei im Innern der Kühlplatte 10 angeordnet. So verursachen mögliche undichte Stellen in Kühlleitungen 14 keine Schäden bei den Batteriezellen 40.

Ferner umfassen die Kühlleitungen 14 eine Einlass- 16 und eine Auslassöffnung 17. Damit können die Kühlleitungen 14 an einem Kühlungssystem angeschlossen werden. Bevorzugt sind die Einlass- 16 und die Auslassöffnung 17 als Kühlerstutzen ausgestaltet. Solche Ansatzrohrstücke als Einlass- 16 und die Auslassöffnung 17 bieten stabile und zuverlässige Verbindungsstellen mit dem Kühlungssystem.

Wie aus Fig. 1 ersichtlich, bildet die Kühlplatte 10 in dieser Ausführungsform nicht nur einen, sondern zwei abgeschlossene Räume 30 mit jeweils einem, voneinander verschiedenen Gehäuse 20. Ein erster abgeschlossener Raum 30 wird oberhalb der Kühlplatte 10 gebildet, während ein zweiter abgeschlossener Raum 30 unterhalb der Kühlplatte 10 gebildet wird. Vorteilhaft werden durch nur eine Kühlplatte 10 zusammen mit zwei Gehäusen 20 also zwei abgeschlossene, voneinander getrennte Räume 30 zur Aufnahme von Batteriezellen 40 bereitgestellt.

In Bezug auf den oberen abgeschlossenen Raum 30 bildet die Kühlplatte 10 eine untere Begrenzung des abgeschlossenen Raumes 30. In Bezug auf den unteren abgeschlossenen Raum 30 bildet die Kühlplatte 10 eine obere Begrenzung des abgeschlossenen Raumes 30. Vorteilhaft kann die Kühlplatte 10 also gleichzeitig eine untere und obere Begrenzung zweier abgeschlossenen Räume 30 bilden.

Die beiden Räume 30 können mittels einer Durchgangsstelle 18 in der Kühlplatte 10 verbunden sein. Kabeln oder anderen Bauteilen, die die beiden Räume 30 miteinander, insbesondere elektrisch, verbinden sollen, steht die Durchgangsstelle 18 zur Verfügung. Je nach Bedarf kann die Durchgangstelle 18 durch eine Öffnung ausgebildet sein, die ggf. gut abgedichtet ist.

Ferner weist das obere Gehäuse 20 Schnittstellen 25 auf. Über diese Schnittstellen 25 können elektrische Leitungen, etwa 12 V- oder HV- Leitungen, von außen angeschlossen werden. Diese Schnittstellen 25 können als Steckverbindungen realisiert sein oder auch als Durchbrüche ausgestaltet sein. Wichtig ist, dass die Dichtheit gewährleistet ist.

Weiter ist in Fig. 1 dargestellt, dass der abgeschlossene Raum 30 mittels einer zwischen dem Gehäuse 20 und der Kühlplatte 10 angeordneten Dichtung 15 abgedichtet ist. Die Kühlplatte 10 umfasst hierfür bevorzugt eine Dichtungsfuge 19, wie in Fig. 2 angedeutet. Die Dichtung 15 kann in Form einer Dichtlippe ausgestaltet sein. Somit wird die Dichtheit des Raumes 30 weiter erhöht.

Mit der vorliegenden Erfindung werden auch Batteriezellen 40 bereitgestellt, die in einem durch ein Gehäuse 20 und einer erfindungsgemäßen Kühlplatte 10 gebildeten, abgeschlossenen Raum 30 angeordnet sind. Die Erfindung lässt vorteilhafterweise verschiedene Anordnungsmöglichkeiten zu. So können die Batteriezellen 40 direkt auf der Kühlplatte 10 angeordnet sein. Vorteilhaft bietet die Kühlplatte 10 die Möglichkeit, dass die Batteriezellen 40 über Schraubverbindungen stabil auf der Kühlplatte 10 fixiert werden.

Je nach Bedarf bietet die Erfindung auch die Möglichkeit, die Batteriezellen 40 direkt an der Kühlplatte 10 hängend anzuordnen. Hierzu könnte beispielsweise der Deckel der Batteriezellen 40 eine spezielle Kunststoffstruktur aufweisen, mit der eine Aufhängung ermöglicht wird.

Übrigens kann eine notwendige Verspannung der Batteriezellen in lateraler Richtung gegebenenfalls komplett durch das Gehäuse 20 erreicht werden.

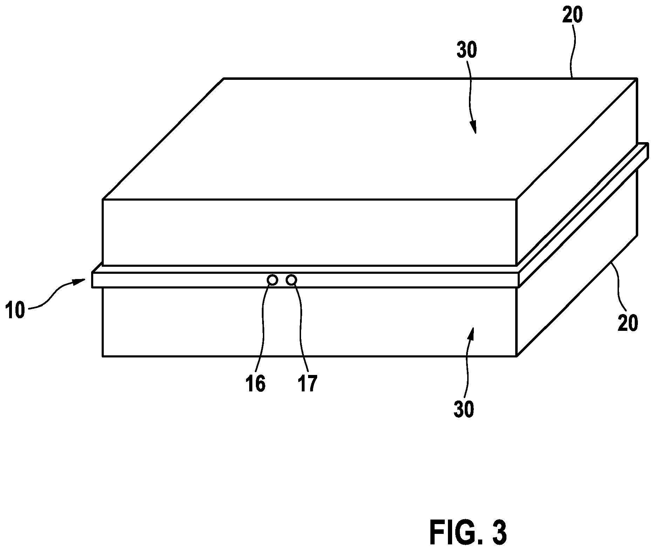

Eine weitere Ausführungsform der Erfindung ist in Fig. 3 dargestellt. Auch in dieser Ausführungsform bildet eine Kühlplatte 10 zusammen mit zwei Gehäusen 20 jeweils einen abgeschlossenen Raum 30. Die Montageelemente 12 sind in Fig. 3 nicht dargestellt, da hier nur ein Ausschnitt der gesamten Kühlplatte 10 gezeigt ist. Im Vergleich zu der ersten Ausführungsform gemäß Fig. 1 ist das Gehäuse 20 flacher ausgebildet. Diese Ausführung kann bevorzugt werden, wenn das zum Einbau zur Verfügung stehende Volumen im Kraftfahrzeug eine andere Form oder Größe nicht erlaubt. Bei Bedarf können die - in Fig. 3 nicht dargestellten - Batteriezellen 40 nicht auf ihrer Bodenseite stehend, sondern auf eine ihrer breiten Seitenflächen (Mantelfläche) liegend angeordnet werden.

Übrigens können die Batteriezellen 40 in allen Ausführungsformen als Lithium-Ionen-Batteriezellen ausgebildet sein.

Weiter wird ein Batteriezellenmodul mit erfindungsgemäßen Batteriezellen 40 bereitgestellt, wobei die Batteriezellen 40 miteinander elektrisch verbunden sind.

Solch ein erfindungsgemäßes Batteriezellenmodul kann wiederum zu vielfältigen Zwecken eingesetzt bzw. eingebaut werden. Es wird beispielhaft vorgeschlagen, ein Kraftfahrzeug, insbesondere elektromotorisch antreibbares Kraftfahrzeug, mit einem erfindungsgemäßen Batteriezellenmodul zu versehen, wobei das Batteriezellenmodul mit einem Antriebssystem des Kraftfahrzeugs verbunden ist und im Kraftfahrzeug montiert ist über eine erfindungsgemäße Kühlplatte 10.

## Patentansprüche

1. Batteriezellenmodul mit einer Mehrzahl an elektrisch leitend miteinander verbundenen Batteriezellen (40), wobei
das Batteriezellenmodul weiterhin eine Kühlplatte (10) für die Batteriezellen (40) umfasst, wobei
die Kühlplatte (10) als eine Montageplatte ausgebildet ist und Montageelemente (12) zum direkten Montieren der Kühlplatte (10) in ein Kraftfahrzeug aufweist, wobei
das Batteriezellenmodul weiterhin zwei voneinander verschiedene Gehäuse (20)umfasst, **dadurch gekennzeichnet,**
**dass** die Kühlplatte (10) zusammen mit jeweils jedem der zwei voneinander verschiedenen Gehäuse (20),insbesondere einem Halbschalengehäuse, jeweils einen abgeschlossenen Raum (30) für die Aufnahme von Batteriezellen (40) bildet, und
**dass** die Kühlplatte (10) zusammen mit den zwei voneinander verschiedenen Gehäusen (20) zwei abgeschlossene, voneinander getrennte Räume (30) zur Aufnahme von Batteriezellen (40) bildet, in welchem jeweils Batteriezellen (40) angeordnet sind.

2. Batteriezellenmodul nach Anspruch 1,
**dadurch gekennzeichnet,**
**dass** die Montageelemente (12) als Öffnungen, insbesondere Anschrauböffnungen, ausgebildet sind.

3. Batteriezellenmodul nach Anspruch 1 oder 2,
**dadurch gekennzeichnet,**
**dass** die Montageelemente (12) als Befestigungs- oder Halteelemente, insbesondere Arretier- oder Hakenelemente, ausgebildet sind.

4. Batteriezellenmodul nach einem der Ansprüche 1 bis 3,
**dadurch gekennzeichnet,**
**dass** die Kühlplatte (10) eine untere Begrenzung eines der abgeschlossenen Räume (30) bildet.

5. Batteriezellenmodul nach einem der Ansprüche 1 bis 4,
**dadurch gekennzeichnet,**
**dass** die Kühlplatte (10) eine obere Begrenzung eines der abgeschlossenen Räume (30) bildet.

6. Batteriezellenmodul nach einem der Ansprüche 1 bis 5,
**dadurch gekennzeichnet,**
**dass** die abgeschlossenen Räume (30) jeweils mittels einer zwischen dem jeweiligen Gehäuse (20) und der Kühlplatte (10) angeordneten Dichtung (15) abgedichtet ist.

7. Batteriezellenmodul nach einem der Ansprüche 1 bis 6,
**dadurch gekennzeichnet,**
**dass** die Kühlplatte (10) Kühlleitungen (14), insbesondere Kühlkanäle oder Kühlschläuche, umfasst.

8. Batteriezellenmodul nach Anspruch 7,
**dadurch gekennzeichnet,**
**dass** die Kühlleitungen (14) im Innern der Kühlplatte (10) angeordnet sind.

9. Batteriezellenmodul nach Anspruch 6 oder 7,
**dadurch gekennzeichnet,**
**dass** die Kühlleitungen (14) eine Einlass- (16) und eine Auslassöffnung (17) umfassen.

10. Batteriezellenmodul nach einem der Ansprüche 1 bis 9,
**dadurch gekennzeichnet,**
**dass** die Batteriezellen (40) direkt auf der Kühlplatte (10) angeordnet sind.

11. Batteriezellenmodul nach einem der Ansprüche 1 oder 10,
**dadurch gekennzeichnet,**
**dass** die Batteriezellen (40) direkt an der Kühlplatte (10) hängend angeordnet sind.

12. Kraftfahrzeug, insbesondere elektromotorisch antreibbares Kraftfahrzeug, mit einem Batteriezellenmodul nach einem der Ansprüche 1 bis 11, wobei das Batteriezellenmodul mit einem Antriebssystem des Kraftfahrzeuges verbunden ist und im Kraftfahrzeug montiert ist über die Kühlplatte (10).

## Claims

1. Battery cell module comprising a plurality of battery cells (40) which are electrically conductively connected to one another, wherein
the battery cell module further comprises a cooling plate (10) for the battery cells (40), wherein
the cooling plate (10) is in the form of a mounting plate and has mounting elements (12) for directly mounting the cooling plate (10) into a motor vehicle, wherein
the battery cell module further comprises two housings (20) which are different from one another,
**characterized**
**in that** the cooling plate (10), together with each of the two housings (20) which are different from one another, in particular a half-shell housing, in each case forms a closed-off space (30) for accommodating battery cells (40), and
**in that** the cooling plate (10), together with the two housings (20) which are different from one another, forms two closed-off spaces (30), which are separated from one another, for accommodating battery cells (40), in each of which spaces battery cells (40) are arranged.

2. Battery cell module according to Claim 1,
**characterized**
**in that** the mounting elements (12) are in the form of openings, in particular screw openings.

3. Battery cell module according to Claim 1 or 2,
**characterized**
**in that** the mounting elements (12) are in the form of fastening or holding elements, in particular locking or hook elements.

4. Battery cell module according to one of Claims 1 to 3,
**characterized**
**in that** the cooling plate (10) forms a lower boundary of one of the closed-off spaces (30).

5. Battery cell module according to one of Claims 1 to 4,
**characterized**
**in that** the cooling plate (10) forms an upper boundary of one of the closed-off spaces (30).

6. Battery cell module according to one of Claims 1 to 5,
**characterized**
**in that** the closed-off spaces (30) are each sealed off by means of a seal (15) which is arranged between the respective housing (20) and the cooling plate (10).

7. Battery cell module according to one of Claims 1 to 6,
**characterized**
**in that** the cooling plate (10) comprises cooling lines (14), in particular cooling channels or cooling hoses.

8. Battery cell module according to Claim 7,
**characterized**
**in that** the cooling lines (14) are arranged in the interior of the cooling plate (10).

9. Battery cell module according to Claim 6 or 7,
**characterized**
**in that** the cooling lines (14) comprise an inlet opening (16) and an outlet opening (17).

10. Battery cell module according to one of Claims 1 to 9,
**characterized**
**in that** the battery cells (40) are arranged directly on the cooling plate (10).

11. Battery cell module according to either of Claims 1 and 10,
**characterized**
**in that** the battery cells (40) are arranged in a manner suspended directly from the cooling plate (10).

12. Motor vehicle, in particular a motor vehicle which can be driven by an electric motor, comprising a battery cell module according to one of Claims 1 to 11, wherein the battery cell module is connected to a drive system of the motor vehicle and is mounted in the motor vehicle by means of the cooling plate (10).

## Revendications

1. Module de cellules de batterie comprenant une pluralité de cellules de batterie (40) reliées de manière électriquement conductrice entre elles,
le module de cellules de batterie comportant en outre une plaque de refroidissement (10) pour les cellules de batterie (40),
la plaque de refroidissement (10) étant réalisée sous la forme d'une plaque de montage et
possédant des éléments de montage (12) servant au montage direct de la plaque de refroidissement (10) dans un véhicule automobile,
le module de cellules de batterie comportant en outre deux boîtiers (20) différents l'un de l'autre, **caractérisé en ce**
**que** la plaque de refroidissement (10), conjointement avec respectivement chacun des deux boîtiers (20) différents l'un de l'autre, notamment un boîtier de demi-coque, forme respectivement un espace fermé (30) pour accueillir des cellules de batterie (40) et
**que** la plaque de refroidissement (10), conjointement avec les deux boîtiers (20) différents l'un de l'autre, forme des espaces (30) séparés l'un de l'autre destinés à accueillir des cellules de batterie (40), dans lesquels espaces sont respectivement disposées des cellules de batterie (40).

2. Module de cellules de batterie selon la revendication 1, **caractérisé en ce que** les éléments de montage (12) sont réalisés sous la forme d'ouvertures, notamment d'ouvertures de vissage.

3. Module de cellules de batterie selon la revendication 1 ou 2, **caractérisé en ce que** les éléments de montage (12) sont réalisés sous la forme d'éléments de fixation ou de maintien, notamment des éléments de blocage ou à crochet.

4. Module de cellules de batterie selon l'une des revendications 1 à 3, **caractérisé en ce que** la plaque de refroidissement (10) forme une délimitation basse de l'un des espaces (30) fermés.

5. Module de cellules de batterie selon l'une des revendications 1 à 4, **caractérisé en ce que** la plaque de refroidissement (10) forme une délimitation haute de l'un des espaces (30) fermés.

6. Module de cellules de batterie selon l'une des revendications 1 à 5, **caractérisé en ce que** les espaces (30) fermés sont respectivement rendus étanches au moyen d'une garniture d'étanchéité (15) disposée entre le boîtier (20) respectif et la plaque de refroidissement (10) .

7. Module de cellules de batterie selon l'une des revendications 1 à 6, **caractérisé en ce que** la plaque de refroidissement (10) comporte des conduites de refroidissement (14), notamment des canaux de refroidissement ou des tuyaux de refroidissement.

8. Module de cellules de batterie selon la revendication 7, **caractérisé en ce que** les conduites de refroidissement (14) sont disposées à l'intérieur de la plaque de refroidissement (10).

9. Module de cellules de batterie selon la revendication 6 ou 7, **caractérisé en ce que** les conduites de refroidissement (14) comportent une ouverture d'entrée (16) et une de sortie (17).

10. Module de cellules de batterie selon l'une des revendications 1 à 9, **caractérisé en ce que** les cellules de batterie (40) sont disposées directement sur la plaque de refroidissement (10).

11. Module de cellules de batterie selon l'une des revendications 1 ou 10, **caractérisé en ce que** les cellules de batterie (40) sont disposées directement suspendues à la plaque de refroidissement (10).

12. Véhicule automobile, notamment véhicule automobile pouvant être propulsé par moteur électrique, comprenant un module de cellules de batterie selon l'une des revendications 1 à 11, le module de cellules de batterie étant relié à un système de propulsion du véhicule automobile et étant monté dans le véhicule automobile par le biais de la plaque de refroidissement (10) .
